(19) Europäisches Patentamt
European Patent Office
Office européen des brevets

(11) Publication number: 0 211 338
A2

(12) # EUROPEAN PATENT APPLICATION

(21) Application number: 86110186.3

(22) Date of filing: 24.07.86

(51) Int. Cl.⁴: C 01 F 7/06
C 01 F 7/46

(30) Priority: 09.08.85 US 763863

(43) Date of publication of application:
25.02.87 Bulletin 87/9

(84) Designated Contracting States:
AT BE CH DE FR GB IT LI LU NL SE

(71) Applicant: AMERICAN CYANAMID COMPANY
1937 West Main Street P.O. Box 60
Stamford Connecticut 06904-0060(US)

(72) Inventor: Garland, Eric Koester
2 Dauphine
Lake St. Louis Missouri 63367(US)

(74) Representative: Wächtershäuser, Günter, Dr.
Tal 29
D-8000 München 2(DE)

(54) **Process for making alumina.**

(57) Bayer process organic impurities are removed from aqueous caustic solutions of alumina by using a two-step treatment in which a cationic polymer is added between blowoff discharge and prior to feeding the primary settler followed by an anionic polymer, such as starch and/or certain acrylic acid polymers.

EP 0 211 338 A2

,065



## PROCESS FOR MAKING ALUMINA

The present invention is directed to a process of alumina manufacture via the Bayer process. More particularly, it is concerned with improvements in the Bayer alumina process by the step wise, sequential use of (i) cationic polymers between the blow-off discharge and prior to feeding the primary settler and (ii) conventional starch and/or anionic polymers to provide improved plant operation and significant economic advantages.

## BACKGROUND OF THE INVENTION

The almost universally used process for the manufacture of alumina is the Bayer process. In its broadest aspects, this method is carried out almost exclusively in aqueous solution, and is achieved by reaction of bauxite and a strong base such as caustic soda or lime in steam-heated autoclaves whereby the alumina is transformed into a soluble aluminate form. In this step, a considerable amount of impurities results or is released from the bauxite, which must be separated from the desired alumina constituent. These residues commonly known as red muds include soluble materials, such as organics, e.g., humates. Generally these organics appear as very fine particles which are difficult to separate out. Yet the red muds which usually constitute about 5-30% by weight of the ore must be rapidly and cleanly separated from the solubilized alumina liquor in order to make this particular step economically efficient. If the rate of separation is too slow, output is materially diminished and overall process efficiency impaired. Likewise, if the separation is not clean, the resultant alumina in the form of aluminate is somewhat crude and undesirable for a number of end-uses. In addition to soluble impurities, insoluble impurities also contaminate the liquor and both types of impurities adversely affect the product. As a practical matter, brightness of the alumina is important when used in products like toothpaste and paper coatings.

Among the methods of overcoming the above problems, and materially speeding up separation of red muds from alumina as well as effecting a cleaner separation of the constitutents are those disclosed in U.S. Patent Nos. 3,390,959, 3,397,953 and 3,445,187 which employ polyacrylates such as polyacrylic acid and copolymers thereof as anionic flocculants and U.S. Patent No. 3,681,012, which uses combinations of polyacrylates and starch to settle red mud in Bayer alumina recovery circuits. Also of interest in this connection are U.S. Patent No. 3,975,496 which uses a copolymer of acrylic acid and methylolated acrylates for the same purpose, and U.K. Patent Specification Nos. 2,080,272 and 2,112,366, which use, sequentially, combinations of polyacrylic acid and acrylateacrylamide copolymers. Other approaches have been proposed: in Japanese Patent Publication No. 56092116 (7/25/81) is disclosed starch cationized with a quaternary ammonium salt for use as a coagulant for red mud; U.S. Patent No. 4,083,925 promotes ferrous iron separation from alkali metal aluminate liquor by contacting with anionic polyacrylamide under special conditions within the mud settler; East German (DE) Patent No. 2558204 (8/11/77) subjects starch to treatment with sodium tetraboarate and magnesium salt to provide improved flocculating properties with lower levels of starch; Russian Patent No. 507526 (4/06/76)

reports that cationic flocculants of the formula $(R\text{-}Ar\text{-}CH_2\text{-}N\text{-}Ph)^+Cl^-$ are better for mud solids flocculation than other known flocculants; Japanese Patent No. J74018558 (10/05/74) discloses using an inorganic calcium compound and sodium polyacrylate for red mud sedimentation and filtration; and special mention is made of Japanese Patent No. J50096460A (7/31/75) which uses a polymeric sodium acrylate, followed by a cationic polymer flocculant, such as poly(beta-(methacryloxy) ethyltrimethylammonium chloride) to separate red mud from waste water.

U.S. Patent No. 4,578,255 teaches the treatment of Bayer process liquors for the removal of organics with cationic vinylic quaternary ammonium salts but fails to teach the addition of the material between blow-off discharge and prior to feeding the primary settler.

## SUMMARY OF THE INVENTION

In accordance with the invention, an improvement has been discovered in the Bayer process of preparing alumina from bauxite. The Bayer process broadly includes the steps of digesting bauxite in aqueous solution and at elevated temperatures, usually under steam pressure with a strongly basic substance to solubilize the alumina contained in the ore. The aluminate liquor is then separated from the water-insoluble impurities of the bauxite ore which are the water-insoluble residues that remain after reaction between the bauxite ore and basic material used to digest the ore. The impurities include materials originally present in the ore as well as soluble and insoluble reaction products from the digestion step. The aluminate liquor is then treated with an anionic flocculant, such as an anionic starch and/or a polyacrylate, then filtered and alumina in relatively

pure form precipitated from the filtrate as a trihydrate solid. The remaining liquid phase or spent liquor is returned to the initial digestion step and employed as a digestant of additional ore after being reconstituted with additional base. Generally, liquor entrapped with the red muds is washed therefrom with aqueous caustic solution and the resultant liquor is also reused.

The above-discussed impurities, generically referred to as red muds, should be separated from the aluminate liquor at a relatively fast rate to make the overall Bayer process efficient. A major process bottleneck even after many years of development is filter blockage. Also, the separation itself should be clean and complete with but minimal amounts of red mud residue remaining as a dispersed phase in the solubilized alumina liquor. Organics should be substantially completely removed.

In the above-discussed process, the improvement forming the basis of the present invention lies in adding and efficiently mixing a cationic polymer into the Bayer process caustic aluminate solution between blow-off discharge and prior to feeding the settler followed by the conventional step of adding starch and/or a polyacrylate flocculant (e.g., in the primary settler). This treatment leads to improved liquor color, clarity, filtration rates and alumina yield, when compared with state-of-the-art processes, as exemplified by the patents mentioned above. It is critical to the invention to use cationic polymers and anionic polymers and/or starch in a critical sequence, cationic polymers first, and at the point in the Bayer process specified above, i.e., from blow-off discharge to the primary settler and anionic polymer or starch second. The need to add the cationic polymer at the point indicated results from the rapid transformation of the organics from a more easily recovered state to a more difficulty recoverable state such as by thermal degradation thereof or oxidation thereof upon contact with the atmosphere. Thus, because the organics have not been in contact with large quantities of oxygen from the time the ore is dug from the earth until the process stream is removed from the flash tanks after digestion, more efficient removal of organics is effected between the blow-off discharge from the flash tanks and prior to feeding to the settler. Since oxygen, in the form of air, is normally abundant after blow-off discharge, it is even more preferred to add the cationic polymer at the blow-off discharge for even more efficient results. If used together, or in the reverse order as shown by above-mentioned Japanese Patent No. J50096460 (7/31/75) all of the advantages of the present invention will not be achieved. It is important also to substantially completely mix the cationic polymer before adding the anionic. Depending on agitation and other factors, this can require at least about 30 seconds--and longer times are not precluded. While the reasons for the foregoing beneficial results are not clearly understood at this time, it is believed that the cationic polymer must react with and complex with the organics, before being contacted with the anionic polymer and/or starch, then the bulk of the inorganics and the cationically complexed organics are efficiently flocculated. Any other order of addition, or simultaneous addition, or adding the cationic polymer downstream, will not lower the organic content efficiently, and will not have a beneficial effect on organics reduction. This can lead to color retention, filtration problems and organic contaminant build-up during recycle.

## DETAILED DESCRIPTION OF THE INVENTION

According to the present invention there is provided in a process for flocculating red muds from the Bayer alumina recovery circuit comprising adding to the aluminate liquor an anionic flocculant in an amount effective to separate said red mud at an increased rate and with increased efficiency, the improvement which comprises contacting and mixing said aluminate liquor between the blow-off discharge and prior to feeding the primary settler with a water soluble cationic polymer in an amount effective to increase the efficiency of the process by reducing the organics.

The amount of reduction in organics is measured and compared with controls, which generally comprise state-of-the-art aluminate process samples. Reductions of only 5% are significant, but they can range from 10 to 50% or even more, in comparison with the controls.

In preferred features, the anionic flocculant will be selected from starch, homopolymers of acrylic acid or acrylates, copolymers of acrylic acid or acrylates containing at least 80 molar percent acrylic acid or acrylate monomers, alkali metal, alkaline earth metal or ammonium salts of said acids, or a combination of any of the foregoing.

Generally, the amount of anionic flocculant added ranges from 0.01 to 40 lbs. of flocculant per ton of dry mud residue, as is well known in this art. Generally, the amount of cationic polymeric flocculant used in accordance with this invention ranges from 1 lb. to 150 lb. per ton of red mud solids, with optimal dose being dependent on the liquor being treated and the quantity of dissolved organics.

In the context of commercial plant operations addition of the cationic flocculant is carried out in the caustic aluminate solution between blow-off discharge and prior to feeding the primary settler and addition of the anionic flocculant is carried out in the primary settler.

The water soluble organic cationic polymeric flocculant to be employed in the invention can vary rather broadly in type and amount. It must be stable under the process conditions used, e.g., high temperatures and strong caustic conditions, typically, 470°F., 550 psi, 80-400 g./l. total alkali content (expressed as sodium carbonate equivalent). Such polymers can generally be considered quaternary polymers with nitrogen or phosphorous as the quaternary or cationic atom with an aliphatic, cycloaliphatic or aromatic chain. Trivalent ally be considered non-hydrolyzable, quaternary polymers with nitrogen or phosphorous as the quaternary or cationic atom with an aliphatic, cycloaliphatic or aromatic chain. Trivalent or tertiary sulfur can substitute for the quaternary nitrogen or phosphorous in the polymers. The cationic atom to carbon atom ratio is preferably about 1:2 to 1:36 and the molecular weight is above about 800. Examples of these polycationic polymers include polyethyleneamines, polyvinylpyridinium salts, or polyallylammonium salts.

Preferred organic polycationic polymers for use in this invention can be characterized and illustrated by the following formula and examples.

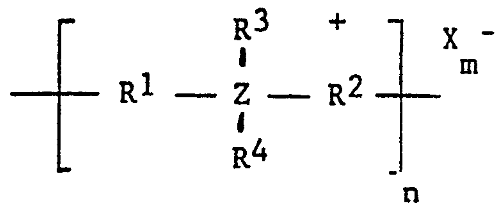

wherein

$R_1$ and $R_2$ are, individually, an organic aliphatic, cycloaliphatic, or aromatic radical containing 1-40 carbon atoms or other organic radicals containing 1-10 oxygen or nitrogen atoms;

$R_3$ and $R_4$ are, individually, hydrogen or organic radicals independently defined as $R_2$, but preferably containing 1-6 carbon atoms;

$R_3$ and $R_4$ together with Z can form a ring;

Z is a cation derived from nitrogen, phosphorous or sulfur and when Z is sulfur, $R_4$ is not present;

X is an anion, preferably, halide, nitrate, sulfate, bisulfate, carbonate, hydroxide, borate, oxide, azide, cyanide, phosphate, phosphite, preferably, methyl sulfate, ethyl sulfate and methyl carbonate, mixtures of any of the foregoing, and the like;

n is an integer equal to the number of monomer units in the polymer required to give a molecular weight in the range of about 800-3,000,000 and preferably at

least about 1,000; and

m is an integer equal to the number of anions required to maintain electronic neutrality.

The organic or hydrocarbon radicals can be linear, branched or cycloaliphatic radicals, aromatic radicals, unsaturated radicals, substituted radicals or combinations thereof. The organic radicals can be homo-aliphatic or heteroaliphatic, i.e., may or may not contain other atoms such as oxygen or nitrogen. The organic radicals can be homocyclic or heterocyclic, i.e., may or may not contain other atoms such as oxygen or nitrogen. Thus, the organic radicals can be substituted or unsubstituted alkyl, aryl or combinations thereof with each radical having 1-40 and preferably 1-6 carbon atoms.

Many of these polymers are commercially available, and all can be made by techniques known to those skilled in this art. They are described in U.S. Patent No. 4,462,718, incorporated herein by reference to save unnecessarily detailed description.

Typical examples of such cationic polymeric flocculants are polydimethyleneammonium salt; the condensation product of N,N,N',N'-tetramethylethylenediamine and 1,4-dichlorobutane; the condensation product of 4-chloropyridine; polyvinyl-4-benzyltrimethylammonium salt; poly(acrylamido-3-propyl-trimethylammonium salt); poly-4-vinyl-N-methylpyridinium iodide; and polymers of diallyldialkylammonium salts. Preferred salts are those having anions described under "X" above. Special mention is made of homopolymers of dimethyl diallyl ammonium salts homopolymer, particularly in a molecular weight range of about 100,000 to about 500,000, and especially about 200,000. Special mention is made also of the reaction product of an epihalohydrin, e.g., epichlorohydrin and an alkylamine, e.g., dimethylamine,

or alkylene polyamine, especially those having an average molecular weight in the range of from about 75,000 to about 250,000.

The conventional anionic flocculant to be employed in this invention includes starch, homopolymers of acrylic acid or acrylate, copolymers of acrylic acid or acrylate wherein the copolymer contains at least 80 mole percent acrylic acid or acrylate monomers, hydrolyzed acrylamide monomers or polymers and combinations thereof. By "acrylate" is meant the salt of an acrylic acid wherein such salts are either alkali metal, alkaline earth metal, or ammonium salts. When copolymers of acrylic acid or acrylate are employed a wide variety of comonomers may be employed in amounts of from about 1 up to about 20 mole percent. Typical comonomers include acrylamide, methacrylamide, acrylonitrile, the lower alkyl esters of acrylic and methacrylic acids, vinyl methyl ether, methacrylic acid salts, maleic anhydride and salts thereof, isopropenyl acetate, itaconic acid, vinyl acetate, alphamethyl styrene, styrene, fumaric acid; aconitic acid, citraconic acid, amides of any of the foregoing acids, alkali metal derivatives (e.g., sodium, potassium and lithium), and ammonium salts of any of the above monomeric acids or others, the partial alkyl ester amides and salts of various polycarboxylic acids, vinyl toluene, chlorostyrene, vinyl chloride, vinyl formate, ethylene, propylene, isobutylene, etc. Of the just-mentioned comonomers, preferred materials contain a hydrophilic group in a side chain off the ethylenically unsaturated hydrocarbon group. Those monomers which do not contain such hydrophilic solubilizing group should be used in lesser amounts of about 1-5% by weight based on total weight of monomer present.

Still other co-monomeric substances which may be employed in conjunction with the acrylic acid or

acrylic acid salt constitutent include materials such as sulfoethyl acrylate, carboxyethyl acrylate, diethyl vinyl phosphonate, crotonic acid or salts thereof, vinyl sulfonate, or salts thereof, vinyl alcohol and vinyl aryl hydrocarbons containing solubilizing groups such as sulfonates, etc.

Particularly useful anionic homopolymers or copolymers of the type described above should preferably have a molecular weight in excess of 50,000, and more preferably in excess of 100,000. Excellent additive polymers have molecular weights even in excess of ten million.

Starch materials useful in the instant invention include potato, corn, tapioca, amylose, sorghum and other readily available starches.

The effective amount of the conventional anionic flocculant employed in the invention will vary depending upon the specific bauxite composition being processed, the conditions present in the recovery stage i.e., temperature, pH, solids concentration and the like, and the red mud flocculant or flocculants employed.

For best results, if starch is combined with polymer these should comprise a weight ratio of starch to polymer ranging from 10:1 to 200:1. However, other weight ratios may be used.

The anionic flocculants used in the invention are employed by simply adding them separately in any sequence to the digested bauxite ore containing solubilized alumina and red mud residues dispersed throughout the aluminate liquor, previously treated with the cationic polymer, in an amount at least sufficient to accelerate the separation of the red mud dispersed solids from the liquid phase. Generally, for best results, at least about 0.1% by weight of anionic flocculant based on mud residue or insolubles should be employed. More preferably, at least 0.2% by weight of anionic flocculant is added to effect rapid separation. Most preferably, 0.2% by weight to about 10% by weight of chemical are added.

The recited 0.1% by weight dosage of anionic flocculant as given is based on red mud residue. This minimum value may be converted to a bauxite ore basis.

The red mud content of a bauxite ore may vary from 5 to 30% by weight. The minimum dosage of the flocculant on an ore weight basis is naturally dependent on the percent of red mud present.

The Table given below summarizes the conversion of the minimum 0.1% by weight dosage and the 10% by weight dosage as based on red mud to a bauxite ore basis.

TABLE

| | Bauxite ore containing 5% by weight red mud | | Bauxite ore containing 30% by weight red mud | |
|---|---|---|---|---|
| Dosage basis | Weight percent on bauxite ore basis | Lb. flocculant/ used/ton bauxite ore | Weight percent on bauxite ore basis | Lb. flocculant used/ton bauxite ore |
| 0.1% by weight based on red mud | 0.005 | 0.1 | 0.03 | 0.61 |
| 10% by weight based on red mud | 0.5 | 10.0 | 3.0 | 61.0 |

It will be noted that from about 0.1 to about 61 pounds of flocculant may be used per ton of bauxite ore; however, other ranges may be suitable, for example, from about 0.21 to about 3.04 pounds per ton of bauxite ore of a flocculating agent. Stated another way from about 0.2 to about 3.0 parts per weight of flocculating agent can be used per 2,000 parts by weight of bauxite ore.

It is understood, that higher amounts than the just-stated maximum may be employed without departing from the scope of the invention, although generally a point is reached in which additional amounts of chemical do not improve the separation rate over already achieved maximum rates. Thus, it is uneconomical to use excessive amounts of material when this point is reached.

In a typical commercial Bayer process, raw bauxite is continuously fed to a breaker. There, the ore is pulverized to a finely divided state. The pulverized ore is then fed to a slurry mixer where a 50% solids slurry is prepared using spent liquor. This bauxite slurry is then diluted and sent through three digesters (in series) where, at about 470°F. and 550 p.s.i., 98% of the total available alumina is extracted from ore containing both trihydrate and monohydrate forms. The effluent from the digesters passes through a series of nine flash tanks wherein heat and condensate are recovered as the digested slurry is cooled to about 230°F. and brought to atmospheric pressure. The aluminate liquor leaving the flashing operation contains about 3% solids and is fed to the center well of a mud settler.

In accordance with this invention, prior to feeding, and preferably at the blow-off discharge there is added, for example, 0.5 g./l. of a solution prising poly(dially dimethyl ammonium chloride) (MW 200,000). Thereafter there is fed to the center well of the mud settler a sodium polyacrylate/starch solution in amounts sufficient to maintain a mud settling rate of from 15 to 20 feet per hour. This amount is such that the combined weight of addition is about 0.1% as based on the weight of said impurities. The ratio of starch to sodium polyacrylate added is from 10 to 200 parts by weight. Then starch/sodium polyacrylate composition is added to the bauxite slurry in the form of a dispersion.

This dispersion is made up in about a 5% aqueous sodium hydroxide solution. As the red mud settles, clarified sodium aluminate solution, referred to as "green" or "pregnant" liquor, overflows a weir at the top of the mud settling tank and is passed to the subsequent process steps. The settled solids ("red mud") are withdrawn from the bottom of the mud settler and passed through a countercurrent washing circuit for recovery of sodium aluminate and caustic. In accordance with the present invention, as will be shown in the following examples, beneficial results in terms of reduction in organics will be obtained in such a process.

## DESCRIPTION OF THE PREFERRED EMBODIMENTS

Whereas the exact scope of the instant invention is set forth in the appended claims, the following specific examples illustrate certain aspects of the invention and, more particularly, point out methods of evaluating the same. The examples are illustrative and are not intended to limit the claims. All parts and percentages are by weight unless further specified.

## EXAMPLES 1-14

The following separations are carried out using settler feed obtained from commercial-scale bauxite digestion. The liquor consists mainly of sodium aluminate solution with suspended red mud solids (solids content 3% by weight) and the normal impurities. To 100 mls of this hot (105°C) slurry in a beaker is added 2 mls of a dilute aqueous poly(diallyldimethylammonium

chloride) "poly(DADM)" cationic polymer solution of the molecular weight in Table 1 and the solution is then gently agitated for approximately 2 minutes. To this is gently added 0.05 mls of a 0.06% aqueous solution of a poly(ammonium acrylate) of molecular weight 6 x $10^6$, and the slurry is then agitated. It is then allowed to settle for about 15 minutes and the supernatant filtered through a #4 filter paper. The filtrate is diluted 10 times with water and its absorbance measured by Spectrophotometer so as to determine the removal of organics. Lower absorbance values reflect reduced organics concentration. For comparison purposes, two control samples are also run. The data obtained are set forth in Table 1.

TABLE 1.

Treatment of Bayer Alumina Settler Feed With Poly(diallyldimethylammonium Chloride) Followed By Poly(ammonium acrylate)

| Example | Cationic Polymer Molecular Weight | Cationic Polymer Dosage, g/l | #/ton of mud solids | Absorbance |
|---|---|---|---|---|
| A* | -- | 0 | 0 | 0.794 |
| B* | -- | 0 | 0 | 0.806 |
| 1 | 100,000 | 0.20 | 13 | 0.571 |
| 2 | 100,000 | 0.80 | 52 | 0.355 |
| 3 | 200,000 | 0.08 | 5.2 | 0.742 |
| 4 | 200,000 | 0.16 | 10.6 | 0.602 |
| 5 | 200,000 | 0.16 | 10.6 | 0.548 |
| 6 | 200,000 | 0.40 | 26 | 0.525 |
| 7 | 200,000 | 0.40 | 26 | 0.525 |
| 8 | 200,000 | 0.80 | 52 | 0.398 |
| 9 | 200,000 | 1.60 | 106 | 0.312 |
| 10 | 200,000 | 1.60 | 106 | 0.287 |
| 11 | 500,000 | 0.16 | 10.6 | 0.611 |
| 12 | 500,000 | 0.20 | 13 | 0.580 |
| 13 | 500,000 | 0.64 | 42.6 | 0.449 |
| 14 | 500,000 | 0.80 | 52 | 0.349 |

* Control

It is clearly evident from the data that prior addition of the cationic polymer provides a dramatic and unexpected improvement in the organics removal of the settler feed.

## EXAMPLE 15

Using a procedure similar to that described for Examples 1-14, a test is carried out using 0.2 g. of 100,000 MW poly-DADM per liter of settler feed followed by addition of a sodium polyacrylate. Results are essentially the same as those observed in Example 1, i.e., a substantial lowering in absorbance readings is observed.

## EXAMPLE 16

If the procedure described in Example 4 is repeated substituting for the poly(diallyldimethylammonium chloride) an equivalent amount, 0.2 grams of poly(diallyldimethylammonium sulfate) per liter of settler feed followed by addition of poly(ammonium acrylate) substantially the same results will be obtained.

## EXAMPLES 17-19

Using a procedure similar to that described for Examples 1-14, but substituting in place of poly (diallyldimethylammonium chloride) a polyamine cationic polymer derived by condensation of dimethylamine with ephichlorohydrine, molecular weight, as specified, the results shown in Table 2 are obtained:

TABLE 2.

Treatment of Bayer Alumina Blow-off Discharge With Cationic Polyamine Followed by Poly(Ammonium Acrylate)

| Example | Cationic Polymer Molecular Weight | Cationic Polymer Dosage, g/l | #/ton | Absorbance |
|---|---|---|---|---|
| C* | -- | 0 | 0 | 0.794 |
| 17 | 75,000 | 2.0 | 133 | 0.615 |
| 18 | 250,000 | 0.1 | 6.7 | 0.581 |
| 19 | 250,000 | 2.0 | 133 | 0.683 |

* Control

A significant improvement in the clarity of the caustic blow-off discharge is achieved.

EXAMPLE 20-23

The procedure of Examples 1-14 is employed and after settling for about 15 minutes, a portion of the supernatant is removed and analyzed for suspended solids. The results of testing two separate samples (A and B) of digestor blow-off are set forth in Table 3:

TABLE 3.

Treatment of Bayer Alumina Blow-off Discharge With Cationic Poly(diallyldimethylammonium Chloride) Followed by Poly(ammonium acrylated)

| Example | Cationic Polymer Molecular Weight | Cationic Polymer Dosage, g/l | Suspended Solids, ppm |
|---|---|---|---|
| | | SAMPLE A | |
| D* | -- | -- | 54 |
| 20 | 200,000 | 4.0 | 28 |
| 21 | 200,000 | 0.4 | 48 |
| E* | 200,000 | 0.04 | 58 |
| | | SAMPLE B | |
| F* | -- | -- | 87 |
| 22 | 200,000 | 1.0 | 49 |
| 23 | 500,000 | 1.0 | 55 |
| G* | 500,000 | 0.1 | 93 |

* Control

The foregoing results demonstrate effective and desirable reduction in suspended solids. Controls E* and G* show that unless a suitable, minimum amount of cationic polymer is present, there will be no significant reduction in suspended solids.

EXAMPLES 24-35

The general procedure outlined for Examples 1-14 is repeated, substituting the cationic polymers named hereinafter and, after settling for about 15 minutes, a portion of the supernatant is removed and analyzed for iron ($Fe_2O_3$). The tests are carried out as a single series and in separate single series, and the results obtained are set forth in Table 4:

TABLE 4.

Treatment of Bayer Blow-off Discharge With Cationic Polymer Followed by Poly(ammonium acrylate)

| Example | Cationic Polymer (C.P.)** | C.P. Molecular Weight | C.P. Dosage, g./l. | Iron Analysis g./l. $Fe_2O_3$ |
|---|---|---|---|---|
| | | A Single Series Test | | |
| H* | -- | -- | 0 | 0.019 |
| I* | -- | -- | 0 | 0.019 |
| 24 | polyDADM | 200,000 | 4.0 | 0.009 |
| 25 | polyDADM | 200,000 | 4.0 | 0.013 |
| 26 | polyDADM | 500,000 | 4.0 | 0.010 |
| 27 | polyDADM | 500,000 | 4.0 | 0.014 |
| 28 | Polyamine | 250,000 | 4.0 | 0.004 |
| 29 | Polyamine | 250,000 | 4.0 | 0.016 |
| | | B Separate Single Series Test I | | |
| J* | -- | -- | 0 | 0.010 |
| 30 | polyDADM | 500,000 | 4.0 | 0.010 |
| 31 | polyDADM | 500,000 | 2.0 | 0.006 |
| 32 | polyDADM | 200,000 | 4.0 | 0.004 |
| 33 | polyDADM | 200,000 | 2.0 | 0.007 |
| | | C Separate Single Series Test II | | |
| K* | -- | -- | 0 | 0.0023 |
| L* | -- | -- | 0 | 0.0019 |
| 34 | polyDADM | 200,000 | 0.1 | 0.0016 |
| 35 | polyDADM | 200,000 | 0.05 | 0.0009 |

* Control

** PolyDADM--poly(diallyldimethylammonium chloride)
Polyamine--reaction product of dimethylamine/epichlorohydrin.

TABLE 5.

Treatment of Bayer Alumina Blow-off Discharge With Cationic Polymer Followed by Poly (Ammonium Acrylate), Seeding and Recovery of Alumina by Precipitation

| Example | Liquor | Polymer | Polymer MW | Dosage | Absorbance | Brightness |
|---|---|---|---|---|---|---|
| M* | A | -- | -- | 0 | .685 | 68.0 |
| 36 | A | poly DADM | 200,000 | 1.6 g/l | .217 | 71.0 |
| N* | B | -- | -- | 0 | .798 | 57.6 |
| 37 | B | poly DADM | 200,000 | 0.16g/l | .568 | 64.5 |

* Control

The foregoing Table 5 data confirm the excellent improvement in pregnant liquor clarity and, in addition, demonstrate a significant and substantial improvement in brightness of the ultimate alumina product when using the process of the present invention.

In addition to the advantageous improvements in clarity and brightness, the filtration rate of the flocculated suspensions of Examples (1-19) is qualitatively increased three-fold in comparison with the controls (A-E).

The above-mentioned patents and publications are incorporated herein by reference.

## Examples 38-42
(Comparative)

When the following materials are substituted for the poly-DADM of Examples 1-14, all else remaining equal, no effect in organics removal is achieved.

Example 38 - quaternary of acrylamide-dimethylaminoethyl methacrylate copolymer.

Example 39 - poly(methacrylamidopropyl trimethylammonium chloride).

Example 40 - polyethyleneimine

Example 41 - diallyldimethylammonium chloride monomer.

Example 42 - a Mannich quaternary of polyacrylamide.

## Examples 43 - 44

In order to show the effect of polymers which are unstable to the reaction conditions prevailing in the Bayer process for the removal of organics, a series of experiments is conducted on a feed containing humic acid prepared a described below and compared to a stable polymer.

A one normal sodium hydroxide solution in water containing 250 mg/l of humic acid is heated to 95°C. The cationic polymer (previously diluted to 0.5% on a real basis) is added in the dosage shown below and stirred for 60 seconds and then held at 95 $\pm$ 5°C with gentle stirring for an additional 9 minutes. Two milliliters of a 0.1% solution of anionic flocculant are then added and the resultant slurry is filtered through #42 paper.

Absorbance is then measured at 575nm to determine humic acid removal. The results are set forth in Table 6 below. In the Table, A=poly-(DADM)(MW 200,000); B=poly(trimethylammonium ethyl methacrylate) (MW 3-4 million).

Table 6

| Polymer | Dosage (gm/l) | Humic Acid Conc. (mg/l) | Reduction (%) |
|---|---|---|---|
| | | Example 43 | |
| None | - | 239 | - |
| A | 0.01 | 214 | 10.5 |
| A | 0.02 | 159 | 33.5 |
| A | 0.04 | 134 | 43.9 |
| A | 0.08 | 94 | 60.7 |
| A | 0.16 | 169 | 29.2 |
| | | Example 44 | |
| None | - | 239 | - |
| B | 0.01 | 227 | 5.0 |
| B | 0.02 | 219 | 8.8 |
| B | 0.04 | 236 | 1.3 |
| B | 0.08 | 233 | 2.5 |
| B | 0.16 | 226 | 5.4 |

Table 6 clearly shows the superior effect of cationic polymers which are stable to the Bayer process conditions as compared to those which are not.

As mentioned above, organics (humates) in Bayer process streams arise from dissolution of various organic debris in the hot caustic solution. Initially, humates are of molecular weights ranging from thousands to hundreds of thousands. Cationic polymers which are stable under the conditions of the Bayer process readily form complexes with the anionic humates, and if the humate molecule is sufficiently large, the complex will be insoluble and will precipitate from solution. In the hot caustic solution of the Bayer process however, humate molecules break down at various rates into lower molecular species due to thermal conditions and/or

oxidation thereof. The lower molecular weight breakdown products still form complexes with the cationic polymer but may not form insoluble precipitates, the result being less effective humate removal as break down proceeds.

In an effort to show the criticality pointed out above regarding the present invention, i.e., the treatment of the Bayer process stream between the blow-off discharge and prior to feeding the primary settler a series of laboratory experiments is conducted, the results of which are shown in Table 7, below. As can be seen, the effect of the humate breakdown is readily apparent. Fresh humic acid is readily removed by poly (DADM) with maximum removal at 83%. However, when the humate solution is heated to 95°C for 20 minutes followed by cooling to room temperature, the same poly (DADM) removes substantially less humate at the same dosage, i.e., only 65%. Obviously, similar breakdown occurs during the Bayer process cycle, some break down unavoidably occuring during digestion itself. Thus, the importance of adding the stable cationic polymer at any time between the digester blow-off and the settler feed, preferably at the digester blow-off, is evident.

## Example 45

One portion of a 1N sodium hydroxide solution in water containing 250 ppm of humic acid (Sample A) is contacted with poly (DADM) (MW 200,000) in varying dosages and the percent humic acid reduction is recorded.

A second portion (Sample B) of the same humic acid containing solution is first heated to 95°C for 20 minutes and cooled back to room temperature before poly (DADM) addition.

Table 7

| Sample | Poly (DADM) Dosage (ppm) | %Humic Acid Reduction |
|---|---|---|
| A | 50 | 30 |
| A | 100 | 56 |
| A | 150 | 67 |
| A | 200 | 80 |
| A | 250 | 83 |
| B | 50 | 13 |
| B | 100 | 46 |
| B | 150 | 56 |
| B | 200 | 62 |
| B | 250 | 65 |

## Example 46

Bauxite ore is digested at approximately 145°C under Bayer processing conditions. Samples of the stream from both the blow-off discharge and from the settler overflow are treated with poly(DADM) of mol wt. = 200,000. The results, shown in Table 8, indicate relative advantages of 20% or more in organics removal when adding the cationic polymer as early as possible, namely to the blow-off discharge.

Table 8

| | | ppm Polymer[b] | | | | | |
|---|---|---|---|---|---|---|---|
| Polymer added: | | 0 | 20 | 40 | 60 | 80 | 100 |
| To blow-off discharge | Abs.[c] | 0.101 | .076 | .070 | .067 | .064 | .061 |
| | %red'n | - | 25 | 31 | 34 | 36 | 39 |
| To blow-off after holding 60 min. @100°C | Abs. | 0.106 | .080 | .075 | .070 | .067 | .063 |
| | %red'n | - | 20 | 25 | 30 | 33 | 37 |
| To settler over flow | Abs. | 0.114 | .089 | .087 | .081 | .077 | .076 |
| | %red'n | - | 22 | 24 | 29 | 32 | 33 |

[b] 40% active polymer
[c] Absorbance at 690nm, after filtration through GF/C glass fiber paper.

Example 47

Bauxite ore at a Bayer plant is digested in caustic liquor at approximately 150°C. Results for humate removal with poly (DADM) (MW 200,000) at varying dosages indicate an unusually rapid decomposition of some of the humates, see Table 9. Addition of poly(DADM) as soon as possible after digestion, i.e., to the blow-off discharge, is approximately twice as effective as later addition of polymer in the most important low dosage range up to 100 ppm.

Table 9

| Poly (DADM)[(a)] added: | | ppm 0 | 25 | 50 | 100 | 200 |
|---|---|---|---|---|---|---|
| To liquor at blowoff discharge | Abs.[(b)] | .479 | .398 | .386 | .302 | .311 |
| | %red'n | - | 16.9 | 19.4 | 37.0 | 35.1 |
| - SAME - | Abs. | .446 | - | .349 | .349 | .324 |
| | %red'n | - | - | 21.7 | 21.7 | 27.4 |
| Avg. of above tests - | %red'n | - | 16.9 | 20.6 | 29.4 | 31.3 |
| To blow-off after holding 45 min. at 100°C | Abs. | .498 | .468 | .436 | .423 | .325 |
| | %red'n | - | 6.0 | 12.4 | 15.1 | 34.7 |
| - SAME - | Abs. | .482 | .448 | - | .407 | .317 |
| | %red'n | - | 7.1 | - | 15.6 | 34.2 |
| Avg. of above tests | %red'n | - | 6.6 | 12.4 | 15.4 | 34.5 |
| To settler overflow | Abs. | - | - | - | - | - |
| | %red'n | - | - | 11.1 | 9.0 | 21.5 |

(a) 40% active polymer
(b) Absorbance at 690nm, after filtration through #42 paper

## Example 48

A Bayer liquor with very high humate content is treated with poly(DADM)-MW 200,000. Because of the high humate level, percentage reductions at low dosages of poly(DADM) are not as great as previously shown, but a clear advantage to adding the poly(DADM) to the blow-off discharge, as soon as possible after digestion (Table 10) is evident.

Table 10

| ppm-poly(DADM)[b] | Blow-off Discharge | | Blow - off add'l 25 min at $100^{o}C$ | | Settler Over-flow | | Spent Liquor | |
|---|---|---|---|---|---|---|---|---|
| | Abs.[c] | %red'n | Abs. | %red'n | Abs. | %red'n | Abs. | %red'n |
| 0 | 1.317[c] | - | 1.317[d] | - | 1.275[d] | - | 1.229[d] | - |
| 25 | 1.213 | 7.9 | 1.264 | 4.0 | 1.237 | 3.0 | 1.179 | 4.1 |
| 50 | 1.140 | 13.4 | 1.233 | 6.4 | 1.214 | 4.8 | 1.121 | 8.8 |
| 75 | 1.155 | 12.3 | 1.209 | 8.2 | 1.171 | 8.2 | 1.100 | 10.5 |
| 100 | 1.115 | 19.4 | 1.128 | 14.4 | 1.130 | 11.4 | 1.084 | 11.8 |
| 200 | 1.033 | 21.6 | 1.093 | 17.0 | 1.040 | 18.4 | 1.010 | 17.8 |
| 300 | 0.990 | 24.8 | 1.010 | 23.3 | 0.994 | 23.6 | .952 | 22.5 |
| 400 | 0.915 | 30.5 | 0.962 | 27.0 | .934 | 26.7 | .893 | 27.3 |
| 500 | 0.854 | 35.2 | .920 | 30.1 | .851 | 33.2 | .855 | 30.4 |

(b) 40% active polymer
(c) Absorbance at 690nm after filtration
(d) Avg. of 2 tests

## Example 49

A bauxite ore is digested in caustic liquor at high temperature (approximately $250^{o}C$) in the Bayer process and is treated with poly (DADM) (MW 200,000) at various points in the circuit. Within experimental error, the results of adding the polymer at several different points are not significantly different from one another, see Table 11. These results suggest that the readily degradable humates of this ore were already broken down by the time the liquor got to the blow-off discharge, so that any subsequent decomposition is much slower and elimination thereof is more difficult.

Table 11

| ppm - poly(DADM) | Blow-off Discharge | Blow-off after 30 min at 100°C | Thickener Feed | Thickener Over-flow |
|---|---|---|---|---|
| | %Reduction | %Reduction | %Reduction | %Reduction |
| 10 | 5.8 | 3.2 | 1.9 | 4.0 |
| 22 | 9.8 | 10.2 | 13.8 | 6.9 |
| 50 | 13.2 | 14.0 | 15.3 | 11.7 |
| 100 | 21.8 | 20.0 | 16.0 | 20.8 |
| 200 | 24.4 | 26.3 | 24.0 | 24.0 |
| 350 | 29.8 | 34.2 | 30.3 | 31.0 |
| 500 | 34.1 | 37.8 | 35.9 | 35.0 |

It is understood that mixtures of different homopolymers, and copolymers, as defined above, may be employed with equal success. Likewise, other materials may be added along with the successful polymers. These auxiliary chemicals may be added as dispersing aids, extenders, anti-foamers, etc. It is preferred that both starch and the polymers and interpolymers of the invention be added in form of aqueous solutions in order to insure ready dissolution of the additive into the digester ore slurries.

By the term "polymer" as used herein is meant to include homopolymers, copolymers and interpolymers of acrylic acid or acrylate salts according to the previously defined limits of the invention.

The above-mentioned patents and publications are incorporated herein by reference.

CLAIMS:

1. In a process for separating insoluble red mud from the Bayer alumina recovery circuit wherein from about 0.01 to 40 pounds, per ton of dry mud residue, of an anionic flocculant is added to the liquid stream, the improvement which comprises contacting and efficiently mixing, in said circuit between the blow-off discharge, prior to feeding the primary settler and prior to anionic flocculant addition, from about 1-150 pounds per ton of original dry mud residue content of a water soluble cationic polymer which is stable under the recovery circuit processing conditions to thereby reduce the organics content of said stream.

2. A process as defined in Claim 1 wherein the anionic flocculant is selected from starch, homopolymers of acrylic acid or acrylates, copolymers of acrylic acid or acrylates containing at least 80 molar percent acrylic acid or acrylate monomers, alkali metal, alkaline earth metal or ammonium salts of said acids, or a combination of any of the foregoing.

3. A process as defined in Claim 3 wherein the amount of cationic polymeric flocculant added ranges from 5 lbs to 130 lbs. per ton.

4. A process as defined in Claim 1 wherein addition of the anionic flocculant is carried out in the primary settler.

5. A process as defined in Claim 1 wherein the cationic polymeric flocculent employed is of the formula

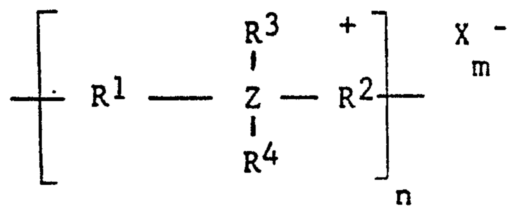

wherein

$R_1$ and $R_2$ are, individually, organic aliphatic, cycloaliphatic, or aromatic radicals containing 1-40 carbon atoms or other organic radicals containing 1-10 oxygen or nitrogen atoms;

$R_3$ and $R_4$ are, individually, hydrogen or organic radicals independently defined as $R_2$ containing 1-6 carbon atoms;

$R_3$ and $R_4$ together with Z can form a ring;

Z is a cation derived from nitrogen, phosphorous or sulfur and when Z is sulfur, $R_4$ is not present;

X is an anion;

n is an integer equal to the number of monomer units in the polymer required to give a molecular weight in the range of about 800-3,000,000 and preferably at least about 1,000; and

m is an integer equal to the number of anions required to maintain electronic neutrality.

6. A process as defined in Claim 5 wherein, in said formula, anion X is selected from halide, nitrate, sulfate, bisulfate, carbonate, hydroxide, borate, oxide, azide, cyanide, phosphate, phosphite or a mixture of any of the foregoing.

7. A process as defined in Claim 5 wherein the cationic polymeric flocculant employed is a dimethyl diallyl ammonium salt homopolymer.

8. A process as defined in Claim 7 wherein the cationic polymeric flocculant employed is a dimethyl diallyl ammonium chloride homopolymer.

9. A process as defined in Claim 7 wherein the dimethyl diallylammonium salt homopolymer has an average molecular weight in the range of from about 100,000 to about 500,000.

10. A process as defined in Claim 7 wherein the dimethyl diallylammonium salt homopolymer has an average molecular weight of about 200,000.

11. A process as defined in Claim 5 wherein the cationic polymer employed is the reaction product of an epihalohydrin with an alkylamine or an alkylene polyamine.

12. A process as defined in Claim 11 wherein the cationic polymer is a reaction product derived from epichlorohydrin and dimethylamine.

13. A process as defined in Claim 12 wherein the reaction product has an average molecular weight in the range of from about 75,000 to about 250,000.

14. A process as defined in Claim 1 wherein the anionic flocculant added is a homopolymer or copolymer of acrylic acid or acrylate containing at least 80 molar percent acrylic acid or acrylate monomers and no more than 20 molar percent acrylamide monomers, or an alkali metal or ammonium salt thereof.

15. A process as defined in Claim 14 wherein the anionic flocculant added is poly(ammonium acrylate).

16. A process as defined in Claim 14 wherein the anionic flocculant added is poly(sodium acrylate).

17. A process as defined in Claim 1 including the steps of

hot filtering the so-treated stream to separate the small amount of remaining red mud solids and any complexed organics;

seeding the filtered stream with fine alumina hydrate crystals to precipitate alumina trihydrate; and

recovering precipitated alumina trihydrate having improved brightness.